(19) Europäisches Patentamt
European Patent Office
Office européen des brevets

(11) **EP 4 410 878 A1**

(12) **EUROPEAN PATENT APPLICATION**
published in accordance with Art. 153(4) EPC

(43) Date of publication:
**07.08.2024 Bulletin 2024/32**

(21) Application number: **23865875.1**

(22) Date of filing: **14.09.2023**

(51) International Patent Classification (IPC):
**C08J 9/16** (2006.01)    **C08J 9/14** (2006.01)
**C08F 2/22** (2006.01)    **C08F 2/44** (2006.01)
**C08F 2/01** (2006.01)    **B01J 20/26** (2006.01)
**B01J 20/28** (2006.01)

(52) Cooperative Patent Classification (CPC):
**B01J 20/26; B01J 20/28; C08F 2/01; C08F 2/22;
C08F 2/44; C08J 9/14; C08J 9/16**

(86) International application number:
**PCT/KR2023/013849**

(87) International publication number:
**WO 2024/058579 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022  KR 20220117461
13.09.2023  KR 20230121985**

(71) Applicant: **LG Chem, Ltd.**
**Yeongdeungpo-gu**
**Seoul 07336 (KR)**

(72) Inventors:
• **OH, Seungjun**
**Daejeon 34122 (KR)**
• **KIM, Yeji**
**Daejeon 34122 (KR)**
• **KIM, Minchae**
**Daejeon 34122 (KR)**
• **KIM, Jee Seon**
**Daejeon 34122 (KR)**

(74) Representative: **Plasseraud IP**
**66, rue de la Chaussée d'Antin**
**75440 Paris Cedex 09 (FR)**

(54) **POROUS POLYMER PARTICLE AND PROTEIN PURIFICATION COLUMN USING SAME**

(57)    The present invention relates to porous polymer particles comprising: a polymer matrix; and a pore dispersed in the polymer matrix and having a diameter of 50 nm to 500 nm, wherein the epoxy content contained in 1g of porous polymer particles is 500 $\mu$mol or more and less than 5000 $\mu$mol, and a column for protein purification.

【FIG. 1】

**Description**

**[TECHNICAL FIELD]**

CROSS-REFERENCE TO RELATED APPLICATION(S)

This application claims priority benefit of Korean Patent Application No. 10-2022-0117461 filed on September 16, 2022 and Korean Patent Application No. 10-2023-0121985 filed on September 13, 2023 in the Korean Intellectual Property Office, the disclosures of which are incorporated herein by reference in their entirety.

The present invention relates to porous polymer particles and a column for protein purification using the same.

**[BACKGROUND ART]**

As the fields of biopharmaceuticals and regenerative medicine expand, the need for systems that can efficiently separate or purify cells, tissues, microorganisms, and the like is increasing.

In a conventional technique, a resin for purification made from hydrophilic agarose was mainly used, but such a resin is swollen by a buffer during the purification process, which exhibits a problem that the strength decreases, and as a result, the purification speed and efficiency decrease.

On the other hand, when a synthetic polymer is used as a resin for protein purification, it has the advantage of providing higher strength than agarose. However, when a synthetic polymer exhibits low sphericity and large particle size deviation, there is a problem that differences in the movement path of the separated products (or purified products) occur, thereby lowering the separation efficiency. Further, another problem is that proteins are non-specifically adsorbed due to the surface properties of synthetic polymers, resulting in a decrease in purification efficiency.

Therefore, a technology for producing polymer particles suitable for use as resin for protein purification is being actively researched. In recent years, in order to produce polymer particles, research is being progressing on emulsification devices that can form fine emulsion droplets. Fine emulsion droplets are formed, for example, by using two types of fluids that have low affinity and thus do not mix with each other, such as water and oil, and dispersing one type of fluid within the other type of fluid. Typical emulsions include Water in Oil (W/O) emulsion in which water droplets are dispersed in oil, and Oil in Water (O/W) emulsion in which oil is dispersed in water.

An emulsification apparatus for generating these emulsion droplets is fabricated by adhering two materials to each other, wherein one of the materials has a flow path of a predetermined shape formed thereon, and the other material has an injection port for injecting oil and water into the oil path.

However, in the case of conventionally prepared polymer particles, the pore forming material injected for forming pores has a high viscosity, thereby making it difficult to reuse due to adsorption in the emulsification device, and reducing the production rate.

**[DETAILED DESCRIPTION OF THE INVENTION]**

**[Technical Problem]**

It is an object of the present invention to provide porous polymer particles that are prepared by a method with high preparation efficiency, and have particle and pore sizes suitable for achieving high protein purification performance in columns for protein purification.

It is another object of the present invention to provide a column for protein purification comprising the porous polymer particles.

**[Technical Solution]**

In order to achieve the above object, provided herein is porous polymer particles comprising: a polymer matrix; and a pore dispersed in the polymer matrix and having a diameter of 50 nm to 500 nm, wherein the epoxy content contained in 1g of porous polymer particles measured by the following Equation 1 is 500 $\mu$mol or more and less than 5000 $\mu$mol.

[Equation 1]

$$\text{Epoxy content } (\mu\text{mol/g}) = [(V_0 - V) \times C_{\text{base}} \times 1000] / W$$

wherein in Equation 1, V is the amount (mL) of a base used for the titration of an experimental group sample containing porous polymer particles, $V_0$ is the amount (mL) of a base used for the titration of a control sample using distilled water instead of the porous polymer particles in the experimental group sample, $C_{base}$ is the concentration (M) of a base used for the titration, and W is the mass (g) of the porous polymer particles used for the titration.

Also provided herein is a column for protein purification comprising the porous polymer particles.

Now, porous polymer particles and a column for protein purification using the same according to specific embodiments of the invention will be described in more detail.

Unless explicitly stated herein, the technical terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of one or more other feature, region, integer, step, action, element, component and/or group.

Further, the terms including ordinal numbers such as "a first", "a second", etc. are used herein only for the purpose of distinguishing one component from another component, and are not limited by the ordinal numbers. For instance, a first component may be referred to as a second component, or similarly, the second component may be referred to as the first component, without departing from the scope of the present invention.

As used herein, the term "porous particles" may refer to particles which have pores inside and/or on the surface of the particles.

The (meth)acrylate as used herein means including both acrylate and methacrylate.

Unless otherwise specifically defined or explained herein, the temperature at which the preparation process is performed (or each preparation step) or the temperature at which the numerical features of the produced particles are calculated or measured may be room temperature. Specifically, as used herein, the "room temperature" refers to a temperature in a state where the temperature is not particularly increased or decreased, for example, a temperature in the range of 15°C to 30°C, or 20°C to 30°C.

In the present invention, examples of the substituent groups are described below, but is not limited thereto.

As used herein, the term "substituted" means that another functional group bonds instead of a hydrogen atom in the compound, and a position to be substituted is not limited as long as it is a position at which the hydrogen atom is substituted, namely, a position at which it is substitutable with the substituent. When two or more substituents are substituted, the two or more substituents may be identical to or different from each other.

As used herein, the term "substituted or unsubstituted" means being unsubstituted or substituted with one or more substituents selected from the group consisting of deuterium; a halogen group; a cyano group; a nitro group; a hydroxy group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkoxysilylalkyl group; an arylphosphine group; or a heterocyclic group containing at least one of N, O and S atoms, or being unsubstituted or substituted with a substituent to which two or more substituents are connected among the substituents exemplified above. For example, "the substituent to which two or more substituents are connected" may be a biphenyl group. Namely, the biphenyl group may also be an aryl group, and may be interpreted as a substituent to which two phenyl groups are connected.

As used herein, the aromatic is a characteristic that satisfies Huckel's rule, and a compound can be defined as aromatic if it satisfy all of the following three conditions according to Huckel's rule.

1) There must exist 4n+2 electrons which are fully conjugated by vacant p-orbital, unsaturated bond, unpaired electron pair, and so on.
2) 4n+2 electrons must constitute a planar isomer and form a ring structure.
3) All atoms in the ring must be able to participate in the conjugation.

As used herein, the aliphatic refers to the remaining organic compounds excluding the aromatics mentioned above.

As used herein, the alkyl group is a monovalent functional group derived from an alkane, and may be linear or branched, and the carbon number of the linear alkyl group is not particularly limited, but preferably 1 to 20. Also, the carbon number of the branched alkyl group is 3 to 20. Specific examples of the alkyl group may include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 4-methylhexyl, 5-methylhexyl, 2,6-dimethylheptan-4-yl, and the like, but are not limited thereto. The alkyl group may be substituted or unsubstituted, and if substituted, examples of the substituent are as described above.

Below, the present invention will be described in more detail.

## 1. Porous polymer particles

According to one embodiment of the present invention, there can be provided porous polymer particles comprising: a polymer matrix; and a pore dispersed in the polymer matrix and having a diameter of 50 nm to 500 nm, wherein the epoxy content contained in 1g of porous polymer particles measured by the following Equation 1 is 500 $\mu$mol or more and less than 5000 $\mu$mol.

[Equation 1]

$$\text{Epoxy content } (\mu mol/g) = [(V_0 - V) \times C_{base} \times 1000] / W$$

wherein in Equation 1, V is the amount (mL) of a base used for the titration of an experimental group sample containing porous polymer particles, $V_0$ is the amount (mL) of a base used for the titration of a control sample using distilled water instead of the porous polymer particles in the experimental group sample, $C_{base}$ is the concentration (M) of a base used for the titration, and W is the mass (g) of the porous polymer particles used for the titration.

The present inventors have found through experiments that the porous polymer particles of one embodiment is adjusted to have the diameter of pores distributed in the particles of 50 nm to 500 nm, thus providing a large surface area, and can be suitable for application as particles for protein purification used in the production of pharmaceuticals through processes such as ligand attachment, and completed the invention.

Particularly, as the pores are derived from one type of single pore inducing material as will be described later, the particle production process can be simplified. As the one type of single pore inducing material has a low viscosity, it can pass through the step emulsification microfluidic device at high speed, thereby increasing process efficiency.

Further, one type of single pore inducing material that forms the pores has appropriate miscibility with a monomer, a crosslinking agent and a polymer that form the polymer matrix, and thereby can stably form pores having the above-mentioned appropriate size range during polymerization of the porous polymer particles.

On the other hand, the inventors has found through experiments that it is possible to achieve an excellent protein purification efficiency equivalent to or higher than that of the conventional case as compared to the case of mixing two or more types of pore inducing materials as in the past, and completed the invention.

Further, in case where the pores are derived from a pore inducing material containing a mixture of an alcohol-based compound and an aromatic hydrocarbon-based compound, the pores introduce completely different pore features than when only one type of alcohol compound or one type of aromatic hydrocarbon compound is used as in the past, thereby achieving optimal performance for application as particles for protein purification used in the production of pharmaceuticals through processes such as ligand attachment.

Further, the porous polymer particles of one embodiment are prepared through a step emulsification microfluidic device, which enable preparation of particles of uniform size, thereby maximizing particle performance.

Specifically, the porous polymer particles of one embodiment may include a polymer matrix. The matrix acts as a substrate, a matrix, or a binder for the porous polymer particles, and the pores may be dispersed inside or outside the matrix.

The polymer matrix may include repeating units derived from monomers. The monomer-derived repeating unit is a repeating unit contained in a polymer formed by polymerization of a monomer compound. The monomer is not particularly limited, but the monomer is, for example, a monomer containing an epoxy group, wherein glycidyl methacrylate, glycidyl acrylate, and glycidyl acrylamide can be used alone, or in combination with a monomer not containing an epoxy group.

The monomer not containing an epoxy group includes methyl methacrylate, methyl acrylate, ethyl acrylate, ethyl hexyl acrylate, butyl acrylate, hydroxyethyl methacrylate, trimethylolpropane triacrylate, N-isopropylacrylamide, N-butyl acrylate, and the like.

The polymer matrix may further include repeating units derived from a crosslinking agent. The type of the crosslinking agent is not particularly limited, but for example, multifunctional (meth)acrylate such as ethylene glycol dimethyl (meth)acrylate, ethylene glycol di(meth)acrylate, trimethylolpropane tri(meth)acrylate, pentaerythritol tri(meth)acrylate or dipentaerythritol hexa(meth)acrylate may be used. Alternatively, at least one component of the above-listed crosslinking agents may be used together. Considering the formation of a hydrophilic surface of the particles, and the like, it may be preferable to use ethylene glycol di(meth)acrylate.

On the other hand, the porous polymer particles of one embodiment may include pores. The pores may be induced from one to two types of pore inducing materials described below. The pore inducing material (Porogen) may be contained within droplets that are particle precursors used in the process of preparing porous polymer particles, and may be converted into pores during the pore formation process that forms porous polymer particles from droplets.

Further, when the pores are derived from a pore inducing material containing a mixture of an alcohol-based compound and an aromatic hydrocarbon-based compound, the pores introduce completely different pore features than when only one type of alcohol compound or one type of aromatic hydrocarbon compound is used as in the past, thereby achieving optimal performance for application as particles for protein purification used in the preparation of pharmaceuticals through processes such as ligand attachment.

The pores may be dispersed in the polymer matrix. The pores may be distributed inside or outside the matrix.

The pores may have a diameter of 50 nm to 500 nm, or 50 nm to 400 nm, or 50 nm to 300 nm, or 50 nm to 250 nm, or 50 nm to 200 nm, or 100 nm to 400 nm. Particularly, the pore diameter may be a value measured for pores formed inside or on the surface of the porous polymer particles, and the measurement method thereof is not limited, but it can be measured by, for example, SEM.

Specifically, the porous polymer particles may have a particle surface pore diameter of 50 nm to 500 nm, or 50 nm to 400 nm, or 50 nm to 300 nm, or 50 nm to 250 nm, or 50 nm to 200 nm, or 100 nm to 400 nm, as measured by SEM.

The pore diameter may refer to the distance between two points where a straight line passing through the center of gravity of the pore shape meets the boundary line of the pore for each pore having various shapes. That is, "the pores having a diameter of 50 nm to 500 nm" means that the pore diameter is a maximum of 500 nm or less and a minimum of 50 nm or more.

Therefore, the porous polymer particles provide a large surface area, and may be suitable for application as particles for protein purification used in the preparation of pharmaceuticals through processes such as ligand attachment. On the other hand, if the pore diameter excessively decreases to less than 50 nm, a sufficient space for attaching the ligand and target protein is not secured, which may cause a problem of deterioration of purification performance. Further, if the pore diameter excessively increases to more than 500 nm, the strength of the particles may become weak, and the specific surface area of the particles may become small, which may cause a problem of deterioration of purification performance.

On the other hand, in the porous polymer particles of one embodiment, a numerical value range of the upper limit of the epoxy content contained in 1 g of the porous polymer particles measured according to the following Equation 1 may be less than 5000 $\mu$mol, or less than 4000 $\mu$mol, or less than 3000 $\mu$mol, or less than 2700 $\mu$mol, or less than 2500 $\mu$mol, or less than 2000 $\mu$mol, or less than 1500 $\mu$mol, or less than 1300 $\mu$mol, or less than 1150 $\mu$mol, or less than 1000 $\mu$mol, and the numerical value range of the lower limit thereof may be 500 $\mu$mol or more, or 800 $\mu$mol or more. By combining the numerical value range of the upper limit and the numerical value range of the lower limit, the numerical value range between the lower limit and the upper limit can also be satisfied. An example of the numerical value range between the lower limit and the upper limit may be 500 $\mu$mol or more and less than 5000 $\mu$mol.

The epoxy content refers to the content of epoxy functional groups contained in the polymer matrix that is contained in the porous polymer particles, and can be measured through the titration method of the following Equation 1.

[Equation 1]

$$\text{Epoxy content } (\mu\text{mol/g}) = [(V_0 - V) \times C_{base} \times 1000] / W$$

wherein in Equation 1, V is the amount (mL) of a base used for the titration of an experimental group sample containing porous polymer particles, $V_0$ is the amount (mL) of a base used for the titration of a control sample using distilled water instead of the porous polymer particles in the experimental group sample, $C_{base}$ is the concentration (M) of a base used for the titration, and W is the mass (g) of the porous polymer particles used for the titration.

In the Equation 1, the experimental group sample containing porous polymer particles corresponds to a sample in which an indicator is added after the porous polymer particles are dissolved in a solvent, and specific types of solvent and indicator can be used without any particular limitation. However, when explanation is made by way of an example of an experimental group sample containing the porous polymer particles, there may be mentioned a solution in which 0.1 g of porous polymer particles are mixed with 1 mL HCl/acetone solution (volume ratio of 1/40), and sonicated for 4 minutes, and an indicator solution (0.1% cresol red and 0.1% thymol blue are mixed in a 1:3 volume ratio, and then adjusted to pH 7.0 using NaOH in a concentration range of 1 to 1000 mM) is added to the resulting mixture.

In the Equation 1, the control sample using distilled water instead of the porous polymer particles in the experimental group sample is identical to the experimental group sample, except that distilled water is dissolved in the solvent instead of porous polymer particles. When explanation is made by way of an example of the control sample, there may be mentioned a solution in which 0.1 g of distilled water is mixed with 1 mL HCl/acetone solution (volume ratio 1/40), and sonicated for 4 minutes, and an indicator solution (0.1% cresol red and 0.1% thymol blue are mixed at a volume ratio of 1:3 and adjusted to pH 7.0 using NaOH in a concentration range of 1 to 1000 mM) is added to the resulting mixture.

In the Equation 1, examples of the base used for the titration are not particularly limited, and bases commonly used in the field of acid-base titration can be applied without limitation. However, an example of the base used for the titration may be NaOH.

The porous polymer particles of one embodiment have the advantage that pores of the appropriate range mentioned above can be stably formed in large quantities, as the epoxy content contained in 1 g of porous polymer particles measured by the following Equation 1 satisfies 500 $\mu$mol or more and less than 5000 $\mu$mol.

When the epoxy content contained in 1 g of porous polymer particles measured by the Equation 1 increases excessively to 5000 $\mu$mol or more, the formation of a polymer matrix by the monomer (or crosslinking agent) is not sufficiently achieved due to the epoxy-containing monomer having low affinity for pore inducing materials, whereby as the pore diameter increases excessively, the strength of the particles become weaker, and the specific surface area of the particles become smaller, which may cause a problem of deterioration of purification performance.

Further, when the epoxy content contained in 1g of porous polymer particles measured by the Equation 1 decreases excessively to less than 500 $\mu$mol or the like, the formation of a polymer matrix by the monomer (or crosslinking agent) other than the epoxy-containing monomer having low affinity for pore inducing material is excessively achieved, the pore diameter decreases excessively, and a sufficient space for attaching the ligand and target protein is not secured, which may cause a problem of deterioration of purification performance.

On the other hand, the porous polymer particles may have a particle diameter of 10 $\mu$m to 150 $\mu$m, 30 $\mu$m to 50 $\mu$m, or 35 $\mu$m to 45 $\mu$m, as measured by an optical microscope. During protein purification, the inside of the column is filled with protein purification particles, and the material to be purified flows out. However, if the size of the particles for protein purification is smaller than the above range, it is difficult for reactants such as protein particles to pass through the column. Further, if the size exceeds the above range, that is, if the size of the packing material present in the column is too large, a lot of vacant space (space between particles) is generated in the column and thus, the material to be purified may pass through the column without adhering to the particle surface, which may result in a decrease in purification efficiency.

The particle diameter may refer to the distance between two points where a straight line passing through the center of gravity of the particle meets the boundary line of the particle for each particle having various shapes. That is, "the porous polymer particles having a diameter of 10 $\mu$m to 150 $\mu$m" means that the diameter of the porous polymer particles is a maximum of 150 $\mu$m or less and a minimum of 10 $\mu$m or more.

Further, the porous polymer particles may have a variation coefficient of particle diameter of 20% or less, or 15% or less, or 10% or less, or 7% or less, or 6.8% or less, or 0.1% or more, or 0.1% to 20%, or 0.1% to 15%, or 0.1% to 10%, or 0.1% to 7%, or 0.1% to 6.8%, as measured by an optical microscope.

Examples of methods for measuring the variation coefficient of the porous polymer particles are not limited, but can be calculated, for example, according to the following Equation 2.

$$\text{Coefficient of variation (\%)} = (\text{Standard deviation of particle diameter / Average particle diameter}) \times 100 \qquad \text{[Equation 2]}$$

As the variation coefficient of the particle diameter of the porous polymer particles decreases to the above-mentioned range, the porous polymer particles enable preparation of particles of uniform size, thereby maximizing particle performance.

On the other hand, when the variation coefficient of the particle diameter of the porous polymer particles increases excessively to more than 20% or the like, variation in particle diameter is large, and the particle diameter is non-uniform to thereby form giant particles, which may be unsuitable for application as particles for protein purification used in the production of pharmaceuticals.

On the other hand, the porous polymer particles may be spherical particles. Spherical shape generally means having a shape close to a sphere, and can be confirmed with the naked eye, and for example, it may mean that the length of the longest dimension in the shape of a particle divided by the average diameter is about 0.80 or more. If the particles have a spherical shape, a large surface area can be secured, and protein purification performance can be improved.

On the other hand, the porous polymer particles may be particles for protein purification.

On the other hand, the porous polymer particles may be a polymerization reaction product of a dispersive phase solution and a continuous phase aqueous solution, wherein the dispersive phase solution contains one to two types of pore inducing material, a monomer, and a crosslinking agent. The porous polymer particles can be produced through the polymerization. At this time, the polymerization may be carried out at the interface between the continuous phase and the dispersive phase (i.e., the surface of the dispersive phase droplets) and/or inside the dispersive phase, which is formed after mixing the dispersive phase solution and the continuous phase aqueous solution.

That is, examples of the method for producing the porous polymer particles of one embodiment is not particularly limited, but as an example, a method for preparing porous polymer particles can be used, which method includes mixing a dispersive phase solution and a continuous phase aqueous solution, wherein the dispersive phase solution contains one or two pore inducing materials, a monomer, and a crosslinking agent, and then subjecting the mixture to a polymerization reaction.

The dispersive phase solution refers to a composition that can form a dispersive phase (or droplets) after being mixed with a continuous phase aqueous solution. The continuous phase aqueous solution refers to a composition that can form a continuous phase after being mixed with a dispersive phase solution.

The continuous phase may be an aqueous phase. The aqueous solution that can be used as the continuous phase may be, but is not limited to, a solution containing water and an ionic surfactant or a non-ionic surfactant. For example, the ionic surfactant may be sodium dodecyl sulfate(SDS), and the nonionic surfactant may be Tween 20, Tween 40, Tween 60, Tween 80, Triton X-100, polyvinyl alcohol(PVA), polyethylene glycol(PEG), and the like. In one example, a 0.5% SDS solution may be used as the continuous phase. Although not particularly limited, the water may be distilled water or deionized water.

On the other hand, the dispersive phase is not particularly limited, but may be a material that is insoluble in the continuous phase, and can be polymerized through a crosslinking reaction thereafter. The dispersive phase solution may contain one to two types of pore inducing materials, a monomer, and a crosslinking agent.

The monomer is not particularly limited, but for example, the monomer is a monomer containing an epoxy group, and glycidyl methacrylate, glycidyl acrylate, and glycidyl acrylamide can be used alone, or in combination with a monomer not containing an epoxy group.

The monomer not containing an epoxy group includes methyl methacrylate, methyl acrylate, ethyl acrylate, ethyl hexyl acrylate, butyl acrylate, hydroxyethyl methacrylate, trimethylolpropane triacrylate, N-isopropylacrylamide, N-butyl acrylate, and the like.

In the dispersive phase solution, the content of the monomer may be 10 wt.% to 60 wt.%, or 10 wt.% to 50 wt.%, or 10 wt.% to 40 wt.%, or 17 wt.% to 33 wt.%, based on 100 wt.% of the dispersive phase solution.

If the content of the monomer in the dispersive phase solution increases excessively to more than 60 wt.% or the like based on 100 wt.% of the dispersive phase solution, the epoxy content contained in 1g of the porous polymer particles measured by Equation 1 increases excessively to 5000 $\mu$mol or more, the formation of a polymer matrix by the monomer (or crosslinking agent) is not sufficiently achieved due to the epoxy-containing monomer having low affinity for pore inducing materials, whereby as the pore diameter increases excessively, the strength of the particles become weaker, and the specific surface area of the particles become smaller, which may cause a problem of deterioration of purification performance.

Further, if the content of the monomer in the dispersive phase solution excessively decreases to less than 10 wt.% or the like based on 100 wt.% of the dispersive phase solution, the epoxy content contained in 1 g of the porous polymer particles measured by Equation 1 decreases excessively to less than 500 $\mu$mol or the like, and the formation of a polymer matrix by the monomer (or crosslinking agent) other than an epoxy-containing monomer having low affinity for a pore inducing material is excessively achieved, whereby as the pore diameter excessively decreases, a sufficient space attaching the ligand and target protein is not secured, which may cause a problem of deterioration of purification performance.

The type of the crosslinking agent is not particularly limited, but for example, multifunctional (meth)acrylate such as ethylene glycol dimethyl (meth)acrylate, ethylene glycol di(meth)acrylate, trimethylolpropane tri(meth)acrylate, pentaerythritol tri(meth)acrylate or dipentaerythritol hexa(meth)acrylate may be used. Alternatively, at least one component of the above-listed crosslinking agents may be used together. Considering the formation of a hydrophilic surface of the particles, and the like, it may be preferable to use ethylene glycol di(meth)acrylate.

The content of the crosslinking agent in the dispersive phase solution may be 10 wt.% to 60 wt.%, or 10 wt.% to 50 wt.%, or 10 wt.% to 40 wt.%, or 17 wt.% to 37 wt.%, based on 100 wt.% of the dispersive phase solution.

In one example, the dispersive phase may be a mixed solution of glycidyl methacrylate (GMA) and ethylene glycol dimethacrylate (EGDMA) in a mass ratio of 5:1 to 1:5, 4:1 to 1:4, or 3:1 to 1:3, or 2:1 to 1:2.

That is, the content ratio of the crosslinking agent to 1 part by weight of the monomer may be 0.1 parts by weight to 10 parts by weight, or 0.5 parts by weight to 2 parts by weight. When the above-mentioned content is satisfied, it is advantageous for stably forming an emulsion and securing particle strength and morphological feature through crosslinking at a desired level.

On the other hand, the pore inducing material may include one type of single compound or a mixture of two types. In the dispersive phase solution, the content of one to two types of pore inducing materials may be 10 wt.% to 80 wt.%, or 20 wt.% to 80 wt.%, or 40 wt.% to 80 wt.%, or 45 wt.% to 80 wt.%, or 44 wt.% to 55 wt.%, based on 100 wt.% of the dispersive phase solution.

If the content of the pore inducing material is excessively reduced to less than 10 wt.%, the average diameter of pores in the porous polymer particles is excessively reduced, which makes it difficult to secure a sufficient space for binding a protein. On the other hand, if the content of the pore inducing material excessively increases to more than 80 wt.%, the average diameter of pores in the porous polymer particles increases excessively, which makes it difficult to secure the strength of the particles.

The one type of the pore inducing material is characterized in that the viscosity measured at 20°C is 0.5 cP to 15 cP, or 0.8 cP to 15 cP, or 0.8 cP to 10 cP, or 0.8 cP to 5 cP, or 0.8 cP to 1.5 cP, or 0.8 cP to 1.2 cP. As the one type of single pore inducing material has a low viscosity, it can pass through the step emulsification microfluidic device at a high speed, thereby increasing process efficiency.

Examples of the method of measuring the viscosity is not particularly limited, and conventional viscosity measurement methods can be applied without limitation. However, when explanation is made by way of an example, the viscosity can be measured at a temperature of 20 to 25°C and a fixed RPM of 200 after mounting a spindle No. 61 for low viscosity measurement onto a Brookfield DV2T viscometer. However, the present invention is not necessarily limited thereto, and generally, if the RPM value is the same and the viscosity range of the sample (e.g., solution) to be measured is about 10 to 1000 cp, the viscosity can be measured using another measuring device.

The one type of pore inducing material may include one type of compound selected from the group consisting of an aromatic hydrocarbon-based compound, a ketone-based compound and an acetate-based compound. That is, the one type of pore inducing material may include one type of aromatic hydrocarbon compound, one type of ketone type compound, or one type of acetate type compound.

The aromatic hydrocarbon-based compound may include an aromatic hydrocarbon compound, or a derivative compound in which some of the hydrogen atoms contained in the aromatic hydrocarbon compound are substituted with other functional groups. Specifically, the aromatic hydrocarbon-based compound may include an aromatic hydrocarbon compound having 6 to 20 carbon atoms which is substituted by one or more alkyl groups having 1 to 10 carbon atoms. In the aromatic hydrocarbon compound having 6 to 20 carbon atoms which is substituted by one or more alkyl groups having 1 to 10 carbon atoms, the alkyl group having 1 to 10 carbon atoms may be substituted with at least 1 or more, or 1 to 6, or 1 to 5, or 1 to 4. Examples of the aromatic hydrocarbon-based compound are not particularly limited, but may include mesitylene as an example.

The ketone-based compound may include a ketone compound, or a derivative compound in which some of the hydrogen atoms contained in the ketone compound are substituted with other functional groups. Specifically, the ketone-based compound may include an aliphatic ketone compound having 5 to 20 carbon atoms. Examples of the ketone-based compound are not particularly limited, but may include diisobutyl ketone as an example.

The acetate-based compound may include an acetate compound, or a derivative compound in which some of the hydrogen atoms contained in the acetate compound are substituted with other functional groups. Specifically, the acetate-based compound may include an aliphatic acetate compound having 6 to 20 carbon atoms. Examples of the acetate-based compound are not particularly limited, but may include amyl acetate or hexyl acetate as an example.

On the other hand, the pore inducing material may include a mixture of an alcohol-based compound and an aromatic hydrocarbon-based compound. In the dispersive phase solution, the content of the pore-inducing material including a mixture of an alcohol-based compound and an aromatic hydrocarbon-based compound may be 10 wt.% to 80 wt.%. If the content of the pore-inducing material excessively decreases to less than 10 wt.%, the average diameter of pores in the porous polymer particles excessively decreases, which makes it difficult to secure a sufficient space for binding a protein. On the other hand, if the content of the pore-inducing material excessively increases to more than 80 wt.%, the average diameter of pores in the porous polymer particles increases excessively, which makes it difficult to secure the strength of the particles.

On the other hand, the content of the aromatic hydrocarbon-based compound may be 10 parts by weight to 1000 parts by weight based on 100 parts by weight of the alcohol-based compound. Within the above range, the pore size and particle size suitable for application as particles for protein purification can be satisfied.

The alcohol-based compound may have 11 or less carbon atoms, or 10 or less carbon atoms, or 1 or more carbon atoms, or 1 to 11 carbon atoms, or 1 to 10 carbon atoms. When the carbon number of the alcohol-based compound increases excessively to more than 11 or the like, phase separation occurs too quickly within the dispersive phase during particle polymerization, which can form core-shell shaped particles rather than porous particles. When purifying a protein, a ligand to which the protein to be purified can be attached is attached to the particle surface, but core-shell particles have fewer sites to which ligands can attach as compared to porous particles, thereby being unsuitable for protein purification.

More specifically, the alcohol-based compound may include an aliphatic alcohol having 1 to 11 carbon atoms. The aliphatic alcohol having 1 to 11 carbon atoms may be substituted or unsubstituted, and when substituted, examples of the substituents are as described above.

Specific examples of the aliphatic alcohol having 1 to 11 carbon atoms are not particularly limited, but may include, for example, one or more compounds selected from the group consisting of 1-decanol, 1-butanol, 1-pentanol, 1-hexanol, 1-heptanol, 1-octanol, and 1-nonanol.

The aromatic hydrocarbon-based compound may have 11 or less carbon atoms, or 10 or less carbon atoms, or 6 or more carbon atoms, or 6 to 11 carbon atoms, or 6 to 10 carbon atoms. When an aliphatic hydrocarbon-based compound is used instead of the aromatic hydrocarbon-based compound, phase separation occurs too quickly within the dispersed phase during particle polymerization, resulting in the formation of core-shell particles instead of porous particles. When purifying a protein, a ligand to which the protein to be purified can be attached is attached to the particle surface, but core-shell particles have fewer sites to which ligands can attach as compared to porous particles, thereby being unsuitable for protein purification.

Further, the aromatic hydrocarbon-based compound may include an aromatic hydrocarbon compound having 6 to 8 carbon atoms which is substituted with an alkyl group having 1 to 3 carbon atoms. The aromatic hydrocarbon-based compound may include toluene.

In one example, the dispersive phase solution may include 10 to 1000 parts by weight, or 60 to 500 parts by weight of the pore inducing material based on 100 parts by weight of the monomer. Specifically, the lower limit of the content of the pore-inducing material may be, for example, 10 parts by weight or more, 60 parts by weight or more, 200 parts by weight or more, 250 parts by weight or more, 300 parts by weight or more, 350 parts by weight or more, 400 parts by weight or more, 450 parts by weight or more, or 500 parts by weight or more based on 100 parts by weight of the monomer. Further, the upper limit of the content of the pore inducing material may be, for example, 1000 parts by weight or less, 550 parts by weight or less, 500 parts by weight or less, 450 parts by weight or less, 400 parts by weight or less, 350 parts by weight or less, 300 parts by weight or less, 250 parts by weight or less, or 200 parts by weight or less, based on 100 parts by weight of the monomer. When the above-mentioned content is satisfied, it is advantageous for stably forming an emulsion and securing particle strength and morphological features through crosslinking at a desired level.

The dispersive phase solution may further include an initiator. The type of the initiator is not particularly limited, such as a photopolymerization initiator or a thermal polymerization initiator, as long as the initiator does not interfere with securing particle properties by the preparation method of the present invention. Various examples widely used in the field of conventional polymer particle production can be applied without limitation.

By way of example, initiators such as a ketone initiator, an organic peroxide initiator, an azo initiator, and the like can be used. Specifically, compounds such as 2,2-dimethoxy-2-phenylacetophenone, 2-hydroxy-4'-(2-hydroxyethoxy)-2-methylpropiophenone, 1-hydroxycyclohexyl phenyl ketone, benzoyl peroxide, di-t-amyl peroxide, t-butyl peroxybenzoate, 2,5-dimethyl-2,5 - di-(t-butylperoxy)hexane, 2,5-dimethyl-2,5-di-(t-butylperoxy)hexyne-3 or di-cumyl peroxide, and mixtures thereof may be used, but are not limited thereto.

The content of the initiator is not particularly limited. The initiator can be used by an appropriate amount at a level that does not interfere with securing the desired particle properties. For example, the initiator may be contained in an amount of 0.01 parts by weight or more, specifically 0.05 parts by weight or more, 0.10 parts by weight or more, 0.15 parts by weight or more, or 0.20 parts by weight or more based on 100 parts by weight of the dispersive solution. And, the upper limit of the content of the initiator may be, for example, 5.0 parts by weight or less, specifically, 4.5 parts by weight or less, 4.0 parts by weight or less, 3.5 parts by weight or less, 3.0 parts by weight or less, 2.5 parts by weight or less, 2.0 parts by weight or less, 1.5 parts by weight or less, or 1.0 parts by weight or less.

The polymerization can be carried out under conditions that do not interfere with securing particle properties. For example, the temperature and stirring speed at which polymerization is performed can be appropriately controlled by a person skilled in the art.

On the other hand, the porous polymer particles may be a polymerization reaction product of droplets obtained by passing a dispersive phase solution and a continuous phase aqueous solution through a step emulsification microfluidic device, wherein the dispersive phase solution contains one to two types of pore-inducing materials, a monomer, and a crosslinking agent. Various types of O/W droplets can be produced into uniform sizes by using the step emulsification microfluidic device. The detailed descriptions concerning the dispersive phase solution containing the pore-inducing material, monomer, and crosslinking agent, and the continuous phase aqueous solution are the same as those described above.

On the other hand, in the case of a conventional O/W droplet production device (e.g., batch suspension polymerization method) rather than a step emulsification microfluidic device, the variation coefficient of the particle diameter rapidly increases, which may cause a problem that deviation in large particle diameter is large and the particle size is non-uniform.

The step emulsification microfluidic device may include a first injection port for injecting the dispersive phase solution; a second injection port for injecting a continuous phase solution; a dispersive phase flow path through which the dispersive phase solution flows; a continuous phase flow path through which the continuous phase solution flows; and a microchannel through which the dispersive phase solution flows out to the continuous phase flow path to form droplets.

In particular, the viscosity of the one type of single pore-inducing material is low and thus, when passing through the step emulsification microfluidic device to obtain droplets, the maximum droplet generation speed becomes high and they do not stick to the inside of the step emulsification microfluidic device, so that droplet generation is smooth even during repeatedly use, thereby improving process efficiency.

Further, the viscosity of the pore-inducing material containing the mixture of the alcohol-based compound and the aromatic hydrocarbon-based compound is low, and thus, when passing through the step emulsification microfluidic device to obtain droplets, the maximum droplet generation rate becomes high and they do not stick to the inside of the step emulsification microfluidic device, whereby droplet generation is smooth even during repeated use, thus improving process efficiency.

The speed of the dispersive phase flowing through the dispersive phase flow path is not limited thereto, but may be 1 $\mu\ell$/min to 10 mf/min. The speed of the continuous phase flowing through the continuous phase flow path is not limited thereto, but may be 0.1 $\mu\ell$/min to 100 mf/min.

Specifically, the porous polymer particles can be obtained by a preparation method in which the step of passing a dispersive phase solution containing one to two types of pore inducing materials, a monomer, and a crosslinking agent and a continuous phase aqueous solution through a step emulsification microfluidic device includes injecting the dispersive phase solution into a first injection port; injecting the continuous phase solution into a second injection port; and allowing the dispersive phase flowing in the dispersive phase flow path to flow out to the continuous phase flow path through a microchannel to form droplets.

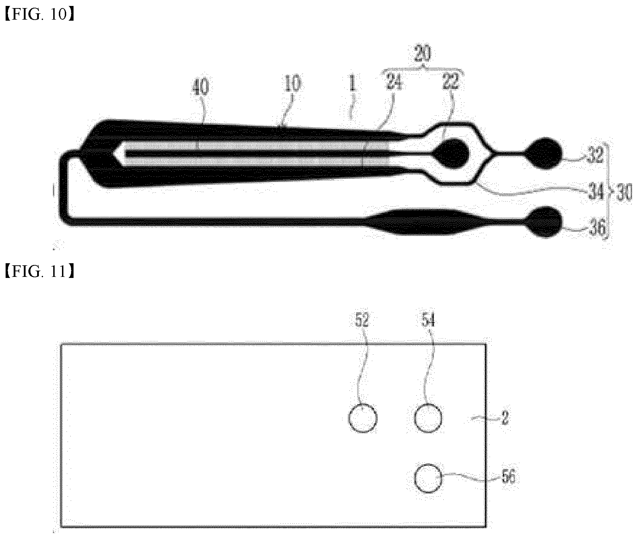

More specifically, referring to FIGS. 10 and 11, the step emulsification microfluidic device is manufactured by adhering a silicon substrate 1 having a set emulsification pattern 10 formed thereon and a glass substrate 2 having first and second injection ports 52 and 54 and discharge ports 56 formed thereon to each other, and thermally oxidizing a silicon substrate 1 and a glass substrate 2 that have been adhered to each other.

When the emulsification device is prepared, the dispersive phase solution is injected into the dispersive phase supply unit 22 of the dispersive phase channel 20 through a first injection port 52 (S210). Here, a monomer, a crosslinking agent, an initiators, and the like may be mixed into the dispersive phase depending on the purpose. The dispersive phase may be injected into the first injection port 52 through a syringe pump, but is not limited thereto. The dispersive phase injected into the dispersive phase supply unit 22 via a first injection port 52 flows through the dispersive phase flow path 24. At this time, the speed of the dispersive phase is not limited thereto, but may be 1 $\mu\ell$/min to 10 mf/min. The dispersive phase flowing through the dispersive phase flow path 24 flows into the continuous phase flow path 34 via a plurality of microchannels 40.

Further, the continuous phase is injected into the continuous phase supply unit 32 of the continuous phase channel 30 via the second injection port 54 (S220). The continuous phase may be injected into the second injection port 54 via a syringe pump, but is not limited thereto. The continuous phase injected into the continuous phase supply unit 32 via the second injection port 54 flows through the continuous phase flow path 34. At this time, the speed of the continuous phase is not limited thereto, but may be 0.1 $\mu\ell$/min to 100 mf/min.

The dispersive phase flowing into the continuous phase flow path 34 via the plurality of microchannels 40 meets the continuous phase flowing through the continuous phase flow path 34, and penetrates into the continuous phase to form O/W droplets (S230).

The O/W droplets flow along the continuous phase flow path 34 to the discharge part 36 together with the continuous phase, and are discharged to the outside of the emulsification device via the discharge port 56.

On the other hand, in the step of polymerizing the droplets obtained from the step emulsification microfluidic device, the polymerization can be either photopolymerization or thermal polymerization. As a photopolymerization initiator or a thermal polymerization initiator are added to the above-mentioned dispersive phase, the polymerization reaction can proceed. Specific examples of the photopolymerization initiator or thermal polymerization initiator, or specific conditions for photopolymerization or thermal polymerization are not particularly limited, and various examples and conditions widely used in the field of conventional polymer particle production can be applied without limitation.

## 2. Column for protein purification

According to another embodiment of the invention, there can be provided a column for protein purification comprising the porous polymer particles of one embodiment. The details concerning the porous polymer particles include all those described above in one embodiment.

Examples of the protein are not particularly limited, and for example, antibody drugs can be used. The porous polymer particles can be applied as beads used in the column for protein purification, and regarding other compositions and structures of the column for protein purification, various compositions and structures widely known in the field of existing purification columns can be applied without limitation.

## [Advantageous Effects]

According to the present invention, porous polymer particles that are prepared by a method with high production efficiency and have a particle size and pore size suitable for realizing high protein purification performance in a column for protein purification, and a column for protein purification using the same can be provided.

**[BRIEF DESCRIPTION OF THE DRAWINGS]**

FIG. 1 shows an SEM image (starting from the left and going to the right: particle surface, particle outer contour cross section, and particle center cross section) of the porous polymer particles obtained in Example 1.

FIG. 2 shows an SEM image (starting from the left and going to the right: particle surface, particle outer contour cross section, and particle center cross section) of the porous polymer particles obtained in Example 2.

FIG. 3 shows an SEM image (starting from the left and going to the right: particle surface, particle outer contour cross section, and particle center cross section) of the porous polymer particles obtained in Example 3.

FIG. 4 shows an SEM image (particle surface) of the porous polymer particles obtained in Example 4.

FIG. 5 shows an SEM image of the porous polymer particles obtained in Example 5.

FIG. 6 shows an SEM image of the porous polymer particles obtained in Example 6.

FIG. 7 shows an SEM image of the porous polymer particles obtained in Example 7.

FIG. 8 shows an SEM image (starting from the left and going to the right: particle surface, particle outer contour cross section, and particle center cross section) of the porous polymer particles obtained in Comparative Example 1.

FIG. 9 shows an SEM image (particle surface) of the porous polymer particles obtained in Comparative Example 2.

FIG. 10 is a plan view of a first substrate of the emulsification device according to an embodiment of the present invention.

FIG. 11 is a plan view of a second substrate of the emulsification device according to an embodiment of the present invention.

**[DETAILED DESCRIPTION OF THE EMBODIMENTS]**

Hereinafter, the present invention will be described in more detail with reference to examples. However, the following examples are for illustrative purposes only, and are not intended to limit the scope of the present invention.

**<Example, Comparative Example: Preparation of porous polymer particles>**

Examples 1 to 7

1) Preparation of dispersive phase

Similar to the materials and contents (based on content: 100 wt.% of dispersive phase solution) listed in Table 1 below, glycidyl methacrylate (GMA) as a monomer, ethylene glycol dimethacrylate (EGDMA) as a crosslinking agent, and a pore inducing material (Porogen) were stirred in a vial. Then, Irgacure 651 as a photoinitiator was further added to the vial at 1 wt.% based on the weight of the stirred solution, and the mixture was stirred at room temperature for about 5 minutes to prepare a dispersive phase solution.

2) Preparation of continuous phase

Sodium dodecyl sulfate (SDS) was dissolved at a concentration of 0.5% in DI water to prepare a continuous phase solution.

3) Preparation of porous polymer particles

A connector was connected to a step emulsification microfluidic device, wherein a dispersive phase was injected into a first injection port 52, a continuous phase into a second injection port 54 using a syringe pump, the dispersive phase flowed out to the dispersive phase flow path 24 at a rate of 20 $\mu\ell$/min, and the continuous phase flowed out to the continuous phase flow path 34 at a rate of 80 $\mu\ell$/min. Thereby, microdroplets with a diameter of about 37 $\mu$m as measured by an optical microscope were generated (see FIGS. 10 and 11 below).

The generated droplets were collected in a 3% PVA (molecular weight 85,000 to 125,000) aqueous solution, shaken so that the droplets were evenly dispersed in the solution, and then photopolymerized using a spot UV curing machine to produce porous polymer particles.

Comparative Examples 1 to 2

1) Preparation of dispersive phase

A dispersive phase solution was prepared in the same manner as in the Examples, except that glycidyl methacrylate (GMA) as a monomer, ethylene glycol dimethacrylate (EGDMA) as a crosslinking agent, and a pore inducing material (Porogen) were used similar to the material and contents (based on content: 100 wt.% of dispersive phase solution) listed in Table 1 below.

2) Preparation of continuous phase

A continuous phase solution was prepared in the same manner as in the Examples.

3) Preparation of porous polymer particles

Porous polymer particles were prepared in the same manner as in the Examples, except that the dispersive phase obtained in the Comparative Example was used.

Comparative Examples 3 to 4

Similar to the materials and contents (based on content: 100 wt.% of dispersive phase solution) shown in Table 1 below, glycidyl methacrylate(GMA), ethylene glycol dimethacrylate (EGDMA) and initiator were dissolved in the pore inducing material solution depending on the ratio of the total volume of glycidyl methacrylate(GMA), ethylene glycol dimethacrylate(EGDMA) and initiator to the volume of pore inducing material of 1:0.5, and stirred to form a transparent homogeneous mixed solution, thereby preparing the oil phase. The pore inducing material solution was prepared by mixing n-hexane and dodecanol in a volume ratio of 1:1.
Then, polyvinyl alcohol (PVA) with a molecular weight of 1800 as a stabilizer and sodium dodecyl sulfate (SDS) as a surfactant were dissolved in deionized water to form a colorless and transparent homogeneous mixed solution, thereby preparing an aqueous phase with a stabilizer concentration of 0.1% and a surfactant concentration of 3.0%.
Then, the oil phase was added to the aqueous phase under mechanical stirring conditions, and the polymerization reaction was performed. The reaction solution was sequentially washed with deionized water and ethanol to remove unreacted residues, and then vacuum dried at 70°C to prepare porous polymer particles.

Reference Example 1

1) Preparation of dispersive phase

A dispersive phase solution was prepared in the same manner as in Example 5.

2) Preparation of continuous phase

A continuous phase solution was prepared in the same manner as in the Example 5.

3) Preparation of porous polymer particles

Porous polymer particles were prepared using a conventional batch suspension polymerization method without using the step emulsification microfluidic device.

**<Experimental Example>**

The physical properties of the porous polymer particles obtained in the Examples, Comparative Examples and Reference Example were measured by the following method, and the results are shown in Table 1 below.

**1. Epoxy content**

(1) Titration of experimental group samples

0.1 g of the porous polymer particles obtained in the Examples, Comparative Examples and Reference Example

**EP 4 410 878 A1**

were mixed with 1 mL HCl/acetone solution (volume ratio of 1/40), and sonicated for 4 minutes. An indicator solution was added to the mixed solution (0.1% cresol red and 0.1% thymol blue were mixed in a 1:3 volume ratio and then adjusted pH to 7.0 using 0.01M NaOH). Titration proceeded with 0.1M NaOH until the solution color became purple-blue.

(2) Titration of control samples

Titration was performed on the control group sample in the same manner as the experimental group sample, except that distilled water was used instead of the porous polymer particles obtained in the Examples, Comparative Examples and Reference Example.

(3) Measurement of epoxy content

The epoxy content contained in 1g of porous polymer particles was calculated using the following Equation 1.

[Equation 1]

$$\text{Epoxy content } (\mu mol/g) = [(V_0 - V) \times C_{NaOH} \times 1000] / W$$

wherein in Equation 1,

V is the amount (mL) of NaOH used for the titration of an experimental group sample containing porous polymer particles,
$V_0$ is the amount (mL) of NaOH used for the titration of a control sample using distilled water instead of the porous polymer particles in the experimental group sample,
$C_{NaOH}$ is the concentration (M) of NaOH used for the titration, and
W is the mass (g) of the porous polymer particles used for the titration.

**2. Particle diameter and variation coefficient**

The porous polymer particles obtained in the Examples, Comparative Examples and Reference Example were observed using an optical microscope at room temperature, and the particle diameter and its coefficient of variation (CV) were measured. Specifically, the particle diameter and variation coefficient of 100 particle samples were measured using an optical microscope at room temperature, and calculated using the following Equation 2.

Coefficient of variation (%) = (Standard deviation of particle diameter / Average particle diameter) X 100 [Equation 2]

**3. Pore diameter**

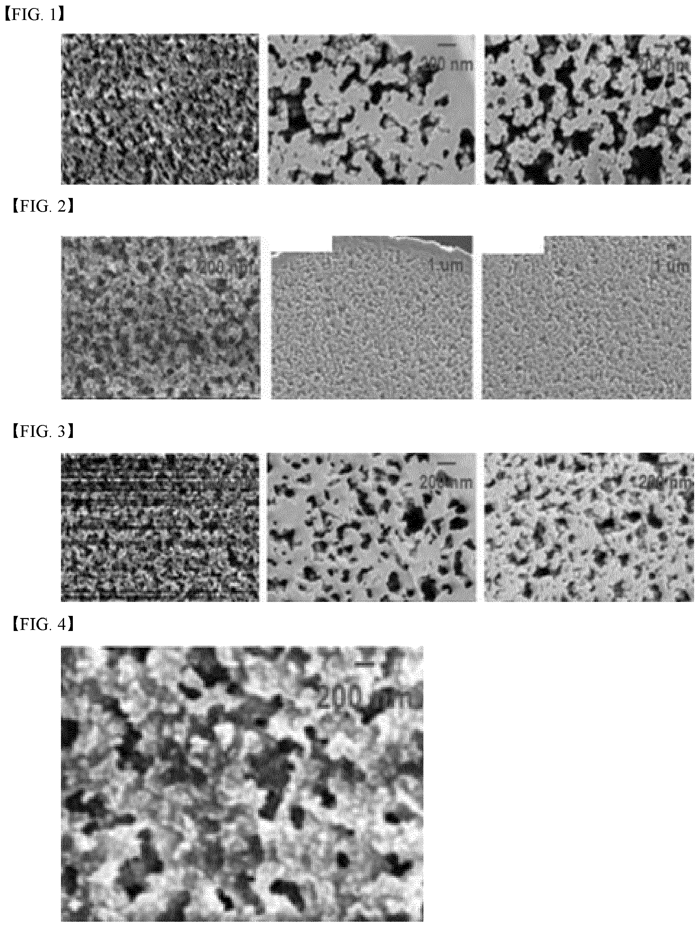

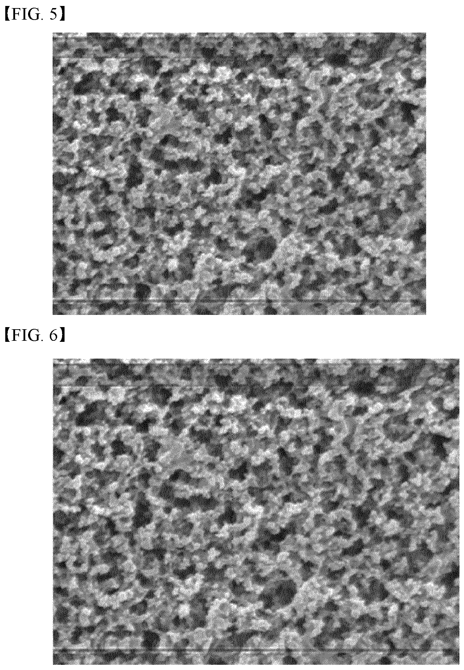

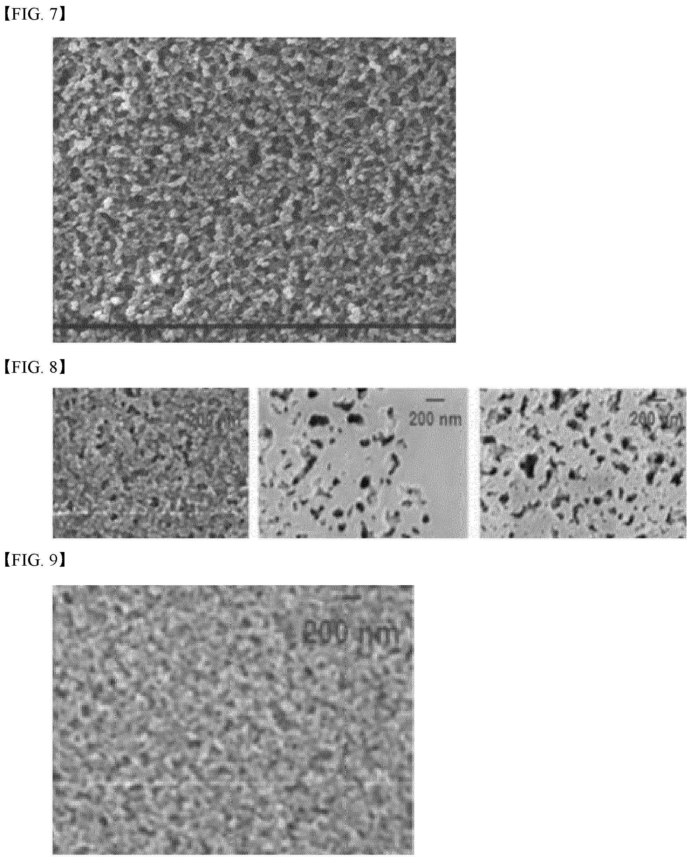

Regarding the porous polymer particles obtained in the Examples, Comparative Examples and Reference Example, the pore diameter ranges of the particle surface, outer contour cut surface, and center cut surface were confirmed through SEM images (see FIGS. 1 to 9 below).

[Table 1]

| Category | Monomer | Crosslinking agent | Pore inducing material | Particles | | | |
|---|---|---|---|---|---|---|---|
| | GMA | EGDMA | | Epoxy content ($\mu$mol/g) | Diameter ($\mu$m) | CV(%) | Pore diameter range (nm) |
| Example 1 | 17 wt.% | 33 wt.% | Mesitylene 50 wt.% | 1200 | 37.2 ~ 42.6 $\mu$m | 6.8% | 50~300 |
| Example 2 | 17 wt.% | 33 wt.% | Diisobutyl ketone 50 wt.% | 900 | 37.2 ~ 42.6 $\mu$m | 6.8% | 50~300 |

13

(continued)

| Category | Monomer | Crosslinking agent | Pore inducing material | Particles | | | |
|---|---|---|---|---|---|---|---|
| | GMA | EGDMA | | Epoxy content ($\mu$mol/g) | Diameter ($\mu$m) | CV(%) | Pore diameter range (nm) |
| Example 3 | 30 wt.% | 15 wt.% | Amyl acetate 55 wt.% | 2600 | 37.2 ~ 42.6 $\mu$m | 6.8% | 50~200 |
| Example 4 | 33 wt.% | 17 wt.% | Hexyl acetate 50 wt.% | 2600 | 37.2 ~ 42.6 $\mu$m | 6.8% | 100~400 |
| Example 5 | 17 wt.% | 33 wt.% | 1-Decanol 25 wt.% + toluene 25 wt.% | 1100 | 37.2 ~ 42.6 $\mu$m | 6.8% | 50~250 |
| Example 6 | 19 wt.% | 37 wt.% | 1-Decanol 22 wt.% + toluene 22 wt.% | 1100 | 37.2 ~ 42.6 $\mu$m | 6.8% | 50~200 |
| Example 7 | 19 wt.% | 37 wt.% | 1-Decanol 24 wt.% + toluene 20 wt.% | 1100 | 37.2 ~ 42.6 $\mu$m | 6.8% | 50~200 |
| Comparative Example 1 | 33 wt.% | 17 wt.% | Diisobutyl ketone 12 wt.% + toluene 38 wt.% | 2700 | 37.2 ~ 42.6 $\mu$m | 6.8% | Less than 50 |
| Comparative Example 2 | 29 wt.% | 14 wt.% | n-Butyl acetate 57 wt.% | 2500 | 37.2 ~ 42.6 $\mu$m | 6.8% | Less than 50 |
| Comparative Example 3 | 60 wt.% | 6.6 wt.% | n-hexane 16.7 wt.% + dodecanol 16.7 wt.% | 5500 | 12.9~51.1 $\mu$m | 38% | More than 500 |
| Comparative Example 4 | 6.6 wt.% | 60 wt.% | n-hexane 16.7 wt.% + dodecanol 16.7 wt.% | 300 | 10.1~49.0 $\mu$m | 43% | 100~400 |
| Reference Example 1 | 17 wt.% | 33 wt.% | 1-Decanol 25 wt.% + toluene 25 wt.% | 1100 | 34.4 $\mu$m | 23.3% | - |

- Mesitylene: viscosity: 1.0 cP (20°C)
- Diisobutyl ketone: viscosity: 0.9 cP (20°C)
- Amyl acetate: viscosity: 0.9 cP (20°C)
- Hexyl acetate: viscosity: 1.2 cP (20°C)
- 1-Decanol: viscosity: 12.0 cP (20°C)
- Toluene: viscosity: 0.56 cP (25°C)
- N-butyl acetate: viscosity: 0.685 cP (25°C)

[Description of Reference Numerals]

| 1: | first substrate | 2: | second substrate |
|---|---|---|---|
| 10: | emulsification pattern | 20: | dispersive phase channel |
| 22: | dispersive phase supply part | 24: | dispersive phase flow path |

(continued)

| | | | |
|---|---|---|---|
| 30: | continuous phase channel | 32: | continuous phase supply part |
| 34: | continuous phase flow path | 36: | discharge part |
| 40: | microchannel | 52: | first injection port |
| 54: | second injection port | 56: | discharge port |

**Claims**

1. Porous polymer particles comprising:

   a polymer matrix; and
   a pore dispersed in the polymer matrix and having a diameter of 50 nm to 500 nm,
   wherein the epoxy content contained in 1g of porous polymer particles measured by the following Equation 1 is 500 $\mu$mol or more and less than 5000 $\mu$mol:

   [Equation 1]

   $$\text{Epoxy content } (\mu\text{mol/g}) = [(V_0 - V) \times C_{base} \times 1000] / W$$

   wherein in Equation 1,

   V is the amount (mL) of a base used for the titration of an experimental group sample containing porous polymer particles,
   $V_0$ is the amount (mL) of a base used for the titration of a control sample using distilled water instead of the porous polymer particles in the experimental group sample,
   $C_{base}$ is the concentration (M) of a base used for the titration, and
   W is the mass (g) of the porous polymer particles used for the titration.

2. The porous polymer particles as claimed in claim 1, wherein:
   the porous polymer particles have a particle surface pore diameter of 50 nm to 500 nm as measured by SEM.

3. The porous polymer particles as claimed in claim 1, wherein:
   the porous polymer particles have a particle diameter of 10 $\mu$m to 150 $\mu$m as measured by an optical microscope.

4. The porous polymer particles as claimed in claim 1, wherein:
   the porous polymer particles have a particle diameter variation coefficient of 20% or less as measured by an optical microscope.

5. The porous polymer particles as claimed in claim 1, wherein:
   the porous polymer particles are particles for protein purification.

6. The porous polymer particles as claimed in claim 1, wherein:
   the porous polymer particles are a polymerization reaction product of a dispersive phase solution and a continuous phase aqueous solution, wherein the dispersive phase solution contains one or two types of pore inducing materials, a monomer and a crosslinking agent.

7. The porous polymer particles as claimed in claim 6, wherein:
   the one type of pore inducing material comprises one type of compound selected from the group consisting of an aromatic hydrocarbon-based compound, a ketone-based compound and an acetate-based compound.

8. The porous polymer particles as claimed in claim 7, wherein:
   the aromatic hydrocarbon-based compound comprises mesitylene.

9. The porous polymer particles as claimed in claim 7, wherein:
   the ketone-based compound comprises diisobutyl ketone.

10. The porous polymer particles as claimed in claim 7, wherein:
the acetate-based compound comprises amyl acetate, or hexyl acetate.

11. The porous polymer particles as claimed in claim 6, wherein:
the one type of pore inducing material has a viscosity of 0.5 cP to 15 cP as measured at 20°C.

12. The porous polymer particles as claimed in claim 6, wherein:
the two types of pore inducing materials comprises a mixture of an alcohol-based compound and an aromatic hydrocarbon-based compound.

13. The porous polymer particles as claimed in claim 12, wherein:
the alcohol-based compound comprises an aliphatic alcohol having 1 to 11 carbon atoms.

14. The porous polymer particles as claimed in claim 12, wherein:
the aromatic hydrocarbon-based compound comprises an aromatic hydrocarbon compound having 6 to 8 carbon atoms which is substituted with an alkyl group having 1 to 3 carbon atoms.

15. The porous polymer particles as claimed in claim 6, wherein:
the content of one to two types of pore inducing materials in the dispersive phase solution is 10 wt.% to 80 wt.% based on 100 wt.% of the dispersive phase solution.

16. The porous polymer particles as claimed in claim 6, wherein:
the content of monomer in the dispersive phase solution is 10 wt.% to 60 wt.% based on 100 wt.% of the dispersive phase solution.

17. The porous polymer particles as claimed in claim 6, wherein:
the content of the crosslinking agent in the dispersive phase solution is 10 wt.% to 60 wt.% based on 100 wt.% of the dispersive phase solution.

18. The porous polymer particles as claimed in claim 1, wherein:

the porous polymer particles are
a polymerization reaction product of droplets obtained by passing a dispersive phase solution and a continuous phase aqueous solution through a step emulsification microfluidic device, wherein the dispersive phase solution contains one or two types of pore inducing materials, a monomer and a crosslinking agent.

19. The porous polymer particles as claimed in claim 18, wherein:

the step emulsification microfluidic device comprises,
a first injection port for injecting the dispersive phase solution;
a second injection port for injecting a continuous phase solution;
a dispersive phase flow path through which the dispersive phase solution flows;
a continuous phase flow path through which the continuous phase solution flows; and
a microchannel through which the dispersive phase solution flows out to the continuous phase flow path to form droplets.

20. A column for protein purification comprising the porous polymer particles as claimed in claim 1.

【FIG. 1】

【FIG. 2】

【FIG. 3】

【FIG. 4】

【FIG. 5】

【FIG. 6】

【FIG. 7】

【FIG. 8】

【FIG. 9】

【FIG. 10】

【FIG. 11】

## INTERNATIONAL SEARCH REPORT

| International application No. |
|---|
| **PCT/KR2023/013849** |

### A. CLASSIFICATION OF SUBJECT MATTER

**C08J 9/16**(2006.01)i; **C08J 9/14**(2006.01)i; **C08F 2/22**(2006.01)i; **C08F 2/44**(2006.01)i; **C08F 2/01**(2006.01)i; **B01J 20/26**(2006.01)i; **B01J 20/28**(2006.01)i

According to International Patent Classification (IPC) or to both national classification and IPC

### B. FIELDS SEARCHED

Minimum documentation searched (classification system followed by classification symbols)

C08J 9/16(2006.01); B01D 15/36(2006.01); B01F 33/00(2022.01); B01J 20/26(2006.01); B81C 99/00(2010.01); C08F 2/20(2006.01); C08F 265/06(2006.01); C12Q 1/686(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 고분자 입자(porous polymer particle), 고분자 매트릭스(polymer matrix), 에폭시 함량(epoxy contents), 기공 직경(pore diameter), 입자 직경(particle diameter), 단백질 정제(protein purification), 메시틸렌(mesitylene)

### C. DOCUMENTS CONSIDERED TO BE RELEVANT

| Category* | Citation of document, with indication, where appropriate, of the relevant passages | Relevant to claim No. |
|---|---|---|
| | STEINBACH, Julia C. et al. Rational design of pore parameters in monodisperse porous poly(glycidyl methacrylate-co-ethylene glycol dimethacrylate) particles based on response surface methodology. Polymers. 19 January 2022, vol. 14, article no. 382, pp. 1-18. | |
| X | See abstract; pages 1-6, 9 and 11; and table 2. | 1-7,11-17,20 |
| Y | | 8-10 |
| A | | 18-19 |
| | KR 10-2019-0107142 A (LIFE TECHNOLOGIES CORPORATION et al.) 18 September 2019 (2019-09-18) | |
| Y | See paragraphs [0046] and [0071]. | 8,10 |
| | KR 10-2010-0042322 A (DONGWOO FINE-CHEM CO., LTD.) 26 April 2010 (2010-04-26) | |
| Y | See paragraphs [0017] and [0042]. | 9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2023** | **18 December 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="3"></td><td>International application No.<br><br>**PCT/KR2023/013849**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | US 2017-0368533 A1 (HITACHI CHEMICAL COMPANY, LTD.) 28 December 2017 (2017-12-28)<br>    See entire document. | 1-20 |
| A | KR 10-2007-0084298 A (NATIONAL AGRICULTURE AND FOOD RESEARCH ORGANIZATION et al.) 24 August 2007 (2007-08-24)<br>    See entire document. | 1-20 |
| PX | KR 10-2023-0057538 A (LG CHEM, LTD.) 02 May 2023 (2023-05-02)<br>    See paragraphs [0053], [0072]-[0074], [0112], [0119]-[0125] and [0156]; and table 1. | 1-8,11-20 |

Form PCT/ISA/210 (second sheet) (July 2022)

## INTERNATIONAL SEARCH REPORT
### Information on patent family members

International application No.

**PCT/KR2023/013849**

| Patent document cited in search report | | | Publication date (day/month/year) | Patent family member(s) | | | Publication date (day/month/year) |
|---|---|---|---|---|---|---|---|
| KR | 10-2019-0107142 | A | 18 September 2019 | CN | 104245745 | A | 24 December 2014 |
| | | | | CN | 104245745 | B | 29 March 2017 |
| | | | | CN | 106883334 | A | 23 June 2017 |
| | | | | CN | 106883334 | B | 18 June 2019 |
| | | | | EP | 2812360 | A2 | 17 December 2014 |
| | | | | EP | 2812360 | B1 | 31 August 2022 |
| | | | | EP | 4116338 | A1 | 11 January 2023 |
| | | | | JP | 2015-507063 | A | 05 March 2015 |
| | | | | JP | 6170074 | B2 | 26 July 2017 |
| | | | | KR | 10-2014-0130155 | A | 07 November 2014 |
| | | | | KR | 10-2019297 | B1 | 06 September 2019 |
| | | | | KR | 10-2081560 | B1 | 25 February 2020 |
| | | | | RU | 2014-136081 | A | 27 March 2016 |
| | | | | RU | 2643034 | C2 | 30 January 2018 |
| | | | | US | 10202473 | B2 | 12 February 2019 |
| | | | | US | 10246533 | B2 | 02 April 2019 |
| | | | | US | 10947333 | B2 | 16 March 2021 |
| | | | | US | 11572427 | B2 | 07 February 2023 |
| | | | | US | 2013-0210991 | A1 | 15 August 2013 |
| | | | | US | 2014-0073715 | A1 | 13 March 2014 |
| | | | | US | 2014-0073738 | A1 | 13 March 2014 |
| | | | | US | 2014-0142254 | A1 | 22 May 2014 |
| | | | | US | 2016-0097094 | A1 | 07 April 2016 |
| | | | | US | 2016-0097095 | A1 | 07 April 2016 |
| | | | | US | 2016-0137762 | A1 | 19 May 2016 |
| | | | | US | 2019-0233558 | A1 | 01 August 2019 |
| | | | | US | 2021-0155726 | A1 | 27 May 2021 |
| | | | | US | 2023-0167210 | A1 | 01 June 2023 |
| | | | | US | 9139665 | B2 | 22 September 2015 |
| | | | | US | 9139666 | B2 | 22 September 2015 |
| | | | | US | 9156925 | B2 | 13 October 2015 |
| | | | | US | 9243085 | B2 | 26 January 2016 |
| | | | | US | 9487603 | B2 | 08 November 2016 |
| | | | | WO | 2013-119936 | A2 | 15 August 2013 |
| | | | | WO | 2013-119936 | A3 | 03 April 2014 |
| KR | 10-2010-0042322 | A | 26 April 2010 | None | | | |
| US | 2017-0368533 | A1 | 28 December 2017 | EP | 3248679 | A1 | 29 November 2017 |
| | | | | EP | 3248679 | A4 | 27 June 2018 |
| | | | | EP | 3248679 | B1 | 26 February 2020 |
| | | | | EP | 3653292 | A1 | 20 May 2020 |
| | | | | EP | 3653293 | A1 | 20 May 2020 |
| | | | | US | 10875008 | B2 | 29 December 2020 |
| | | | | WO | 2016-117574 | A1 | 28 July 2016 |
| KR | 10-2007-0084298 | A | 24 August 2007 | CN | 101043936 | A | 26 September 2007 |
| | | | | CN | 101043936 | B | 07 April 2010 |
| | | | | CN | 101693178 | A | 14 April 2010 |
| | | | | CN | 101693178 | B | 23 April 2014 |
| | | | | EP | 1810743 | A1 | 25 July 2007 |
| | | | | EP | 1810743 | A4 | 22 February 2012 |
| | | | | EP | 1810743 | A8 | 10 October 2007 |

Form PCT/ISA/210 (patent family annex) (July 2022)

<table>
<tr><td colspan="2" align="center">**INTERNATIONAL SEARCH REPORT**<br>**Information on patent family members**</td><td colspan="2">International application No.<br>**PCT/KR2023/013849**</td></tr>
</table>

| Patent document<br>cited in search report | Publication date<br>(day/month/year) | Patent family member(s) | | Publication date<br>(day/month/year) |
|---|---|---|---|---|
| | | EP | 1810743 B1 | 03 December 2014 |
| | | JP | 2008-132394 A | 12 June 2008 |
| | | JP | 3723201 B1 | 07 December 2005 |
| | | KR | 10-0879487 B1 | 20 January 2009 |
| | | US | 2008-0061459 A1 | 13 March 2008 |
| | | US | 7972543 B2 | 05 July 2011 |
| | | WO | 2006-043443 A1 | 27 April 2006 |
| KR 10-2023-0057538 A | 02 May 2023 | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220117461
- KR 1020230121985